# EUROPÄISCHE PATENTSCHRIFT

(11) **EP 4 040 433 B1**
(45) Veröffentlichungstag und Bekanntmachung des Hinweises auf die Patenterteilung: **01.01.2025**
(21) Anmeldenummer: 21155121.3
(22) Anmeldetag: 04.02.2021
(51) Int. Cl.: G10L 15/22, G06F 40/35, G06F 3/16

(54) **DYNAMISCHE GENERIERUNG EINER KETTE VON FUNKTIONSMODULEN EINES VIRTUELLEN ASSISTENTEN**
DYNAMIC GENERATION OF A CHAIN OF FUNCTION MODULES OF A VIRTUAL ASSISTANT
GÉNÉRATION DYNAMIQUE D'UNE CHAÎNE DE MODULES FONCTIONNELS D'UN ASSISTANT VIRTUEL

(43) Veröffentlichungstag der Anmeldung: 10.08.2022
(73) Patentinhaber: Deutsche Telekom AG, 53113 Bonn (DE)
(72) Erfinder: Jahn, Carl, 65191 Wiesbaden (DE); El Mallouki, Said, 56329 St. Goar (DE); Minow, Jascha, 64625 Bensheim (DE); Platschek, Martin Michael, 12557 Berlin (DE)
(74) Vertreter: Braun-Dullaeus Pannen Emmerling Patent- & Rechtsanwaltspartnerschaft mbB

(56) Entgegenhaltungen:
- WO-A1-2018/067402
- WO-A1-2019/203795
- LEE AKINOBU ET AL: "Mmdagent-A fully open-source toolkit for voice interaction sys", ICASSP, IEEE INTERNATIONAL CONFERENCE ON ACOUSTICS, SPEECH AND SIGNAL PROCESSING - PROCEEDINGS 1999 IEEE, IEEE, 26 May 2013 (2013-05-26), pages 8382 - 8385, XP032508902, ISSN: 1520-6149, ISBN: 978-0-7803-5041-0, [retrieved on 20131018], DOI: 10.1109/ICASSP.2013.6639300
- MEURISCH CHRISTIAN ET AL: "AssistantGraph: An Approach for Reusable and Composable Data-Driven Assistant Components", 2019 IEEE 43RD ANNUAL COMPUTER SOFTWARE AND APPLICATIONS CONFERENCE (COMPSAC), IEEE, vol. 1, 15 July 2019 (2019-07-15), pages 513 - 522, XP033610023, ISBN: 978-1-7281-2607-4, [retrieved on 20190702], DOI: 10.1109/COMPSAC.2019.00079

## Beschreibung

Die vorliegende Erfindung betrifft das technische Gebiet der virtuellen Assistenten und insbesondere der virtuellen Sprachassistenten. Es wird ein Verfahren sowie ein Modul zur Generierung von Funktionen von Sprachassistenten angegeben.

Aus dem Stand der Technik ist bekannt, dass virtuelle Assistenten für einen bestimmten Nutzer zum Abarbeiten von Anfragen eine statische Befehlskette, insbesondere eine sogenannte "Voice Chain", auswählen. Loggt sich ein Nutzer beispielsweise in einem Portal ein oder wird seine Stimme von dem virtuellen Assistenten erkannt und einem bestimmten Profil zugeordnet, so kann die statische Befehlskette des Nutzers geladen werden. Dies bedeutet insbesondere, dass die spezifische Auswahl der beispielsweise ASR ("automated speech recognition") Parameter, des NLU ("natural language understanding") Typs und/oder der Sprach-Synthesizer alleine von dem Nutzer abhängen, der die Anfrage getätigt hat. Zwar bieten virtuelle Assistenten den Nutzern die Möglichkeit spezifische Konfigurationen für sich selbst zu definieren, beispielsweise, dass ein Nutzer verschiedene Sprachen anwenden möchte, jedoch werden auch diese Profile statisch dem jeweiligen Nutzer zugeordnet, respektive sind diese statisch an den Nutzer gebunden.

Während eine Anfrage bearbeitet wird, findet also keine Änderung der zuvor geladenen statischen Befehlskette statt. Zwar kann ein Nutzer explizit von seinem ersten Profil, dem ein erste Befehlskette zugeordnet ist, auf ein zweites Profil wechseln, dem eine zweite Befehlskette zugeordnet ist, jedoch bleiben auch diese Konfigurationen an sich statisch. Es besteht also bei gegenwärtig vorhandenen virtuellen Assistenten die Möglichkeit, dass der Nutzer sich in ein anderes Profil bewegen kann, dass aber sobald dieser Wechsel vollzogen ist, jede nachfolgende Anfrage mit der statischen Befehlskette des anderen Profils bearbeitet wird.

Eine solch statische Befehlskette bringt allerdings einige Nachteile mit sich. Sie verhindert nämlich, dass spezifische ASR oder NLU Modelle oder technische Parameter geladen werden, die für eine bestimmte Anfrage eigentlich besser geeignet werden. Zum Beispiel: ein Service zum Üben von Vokabeln in mehreren Sprachen, sollte in der Lage sein jede Sprache zu verstehen, die der Nutzer üben möchte. Jedoch wird die generierte Antwort für den Nutzer immer noch in der Sprache ausgegeben, die dem initial geladenen Profil mit seiner statischen Befehlskette entspricht. Ein anderes Beispiel ist die Verwendung eines implizierten Skills, der das Diktieren von medizinischen Berichten erlaubt, wofür ein spezielles Vokabular erforderlich ist.

In diesem Zusammenhang zeigen auch die WO 2019/203795 A1 und die WO 2018/067402 A1 virtuelle Sprachassistenten, die spezifisch auf Anfragen des Nutzers reagieren.

Es ist also die Aufgabe der Erfindung, eine Kette von Funktionsmodulen für einen virtuellen Assistenten bereitzustellen, die flexibel verschiedenartige Anfragen der Nutzer bearbeiten kann.

Gelöst wird diese Aufgabe durch die Merkmale der unabhängigen Patentansprüche. Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt. Erfindungsgemäß ist ein Verfahren zur dynamischen Generierung einer Kette von Funktionsmodulen eines virtuellen Assistenten angegeben, wobei der virtuelle Assistent als Software auf einer Recheneinheit implementiert ist, wobei dem virtuellen Assistenten eine Bibliothek von verschiedenen Funktionsmodulen zum Beantworten von Anfragen von Nutzern bereitgestellt ist, wobei das Verfahren die folgenden Schritte aufweist:
- Übertragen einer Anfrage eines Nutzers an den virtuellen Assistenten;
   ∘ Beispielsweise kann die Anfrage sowohl englische als auch deutsche Begriffe aufweisen, da die deutsche Sprache inzwischen viele Anglizismen aufweist, ist dies durchaus üblich, also zum Beispiel; "Spiele Favorit Playlist auf meinem iPhone".
- Analysieren der Anfrage mittels eines Auswahlalgorithmus im Hinblick darauf, welches Funktionsmodul aus der Bibliothek mit der höchsten Wahrscheinlichkeit P_{Max} dazu geeignet ist, die Anfrage des Nutzers zu bearbeiten;
   ∘ In dem vorgenannten Beispiel gilt es also zu entscheiden, ob ein Funktionsmodul für die englische oder die deutsche Sprache ausgewählt werden soll, es besteht allerdings im Prinzip auch die Möglichkeit zunächst ein Funktionsmodul für den Intent "Musik auf dem Endgerät abspielen" auszuwählen; die Analyse, welches Funktionsmodul am besten für diese Anfrage geeignet ist. Zweckmäßig wird eine als Audiosignal empfangene Anfrage des Nutzers zunächst mit gängigen Speech-to-Text Algorithmen in Text umgewandelt. Schon um diese Umwandlung ausführen zu können, kann es notwendig sein, entweder das Funktionsmodul für die englische oder die deutsche Sprache korrekt auszuwählen. Für den Fall der Auswahl des geeigneten Funktionsmoduls für eine Sprache, können Elemente des Audiosignals mit einer Bibliothek an hinterlegten Audioelementen in Deutsch und in Englisch verglichen werden. Es wird dasjenige Sprachfunktionsmodul mit den meisten Matches als Funktionsmodul P_{F,Max} ausgewählt. Liegt die Anfrage schon zu Beginn oder nach der Umwandlung in Textform vor, wird analysiert mit welchem Intent, Domain oder welcher Entity die Anfrage die meisten Übereinstimmungen hat - dieses wird als P_{F,Max} ausgewählt. Dazu kann auf den sogenannten Ground-Truth Datensatz zurückgegriffen werden, der die verschiedenen Funktionalitäten des virtuellen Assistenten in verschiedenen Kategorien abbildet. "Spiele Favorit Playlist auf meinem iPhone" könnte also beispielsweise für die Textelemente "Spiele", "Playlist" und "iPhone" mehr Matches in einer Domain des virtuellen Assistenten mit der Funktionalität "Musik abspielen" aufweisen als in einer Domain des virtuellen Assistenten zum Bedienen von Haushaltsgeräten.
- Auswahl des Funktionsmoduls P_{F,Max} mit der höchsten Wahrscheinlichkeit aus der Bibliothek von verschiedenen Funktionsmodulen durch den Auswahlalgorithmus;
- Laden des ausgewählten Funktionsmoduls P_{F,Max} in den virtuellen Assistenten;
   ∘ Falls die Bibliothek von Funktionen schon in dem virtuellen Assistenten implementiert ist, muss das Funktionsmodul P_{F,Max} nicht extra geladen werden, sondern es genügt gegebenenfalls ein Funktionsaufruf.
- Bearbeiten der Anfrage des Nutzers durch den virtuellen Assistenten mittels des ausgewählten Funktionsmoduls P_{F,Max}.
   ∘ Bei dem Beispiel würde also zunächst das deutsche Speech-to-Text Funktionsmodul ausgewählt und der Text in Deutsch transkribiert werden. In einem nächsten Schritt könnte dann erneut das geeignetste Funktionsmodul ausgewählt werden und als "finale" Antwort des virtuellen Assistenten die favorisierte Playlist abgespielt werden.

Dadurch, dass die Verarbeitungskette nicht mehr wie herkömmlich an den Nutzer, sondern an die Anfrage "gebunden" ist, ergeben sich viele Vorteile. Der virtuelle Assistent wird in die Lage versetzt flexibel und dynamisch die passenden Funktionsmodule basierend auf die Anfrage zu wählen und anzuwenden. Es wird also eine dynamische Anpassung während der Laufzeit an die Anfrage ermöglicht, ohne dass der Nutzer sein Profil manuell wechseln muss. Insbesondere wird eine Kommunikation in mehreren Sprachen ermöglicht. Die Ausgabestimme des virtuellen Assistenten kann auch den Skill dahingehend ändern, dass Stimmparameter wie Stimmung, Lautstärke und andere dynamisch der Situation angepasst werden. Dies alles ermöglicht ein einzigartiges Nutzererlebnis. Es ist ein weiterer Vorteil des erfindungsgemäßen Verfahrens, dass schon die erste Nutzung des virtuellen Assistenten durch den Nutzer bedeutend verbessert wird, da kein aufwändiges Set-up Szenario zum Erstellen eines Nutzerprofils beispielsweise durch eine Companion App, notwendig ist. Schon bei der ersten Anfrage werden die ganzen Settings des virtuellen Assistenten durch die Anfrage und eben nicht durch den Nutzer bestimmt. Das nutzen verschiedener Sprachen geht also fließend ineinander über, solange diese von dem System unterstützt werden. Technische Skills werden in der Lage sein spezielle Sprachmodelle für ASR, STT und NLU bereitzustellen und dadurch bessere Resultate zu liefern und die Intention des Nutzers besser zu verstehen. Die Analyseschritte, um beispielsweise die Sprache einer Anfrage zu bestimmen sowie weiteren Kontext, kann durch angepasste Machine Learning Modelle implementiert werden, die verwendet werden, um die Anfrage zu klassifizieren. Dies kann parallel zu der Standardverarbeitung ausgeführt werden. Die parallele Verarbeitung ermöglicht insbesondere eine gute Laufzeit-Performance.

Bevorzugt bestimmt der Auswahlalgorithmus zusätzlich Parameter, insbesondere wählt er diese aus, die mit der höchsten Wahrscheinlichkeit P_{Para ,Max} dazu geeignet sind, die Anfrage des Nutzers zu bearbeiten und diese Parameter P_{Para ,Max} an das ausgewählte Funktionsmodul P_{F,Max} übergibt. Bei der Wahl des Funktionsmoduls zum Transkribieren könnten beispielsweise Parameter geladen werden, die typische Eigenheiten des Nutzers hinsichtlich seiner Aussprache charakterisieren. In diesem Zusammenhang können auch Parameter für die Verarbeitungszeiten (Timeouts) dynamisch an die jeweils ausgeführte Funktion angepasst werden. Bspw. Kann ein Quiz-Skill, je nach Schwierigkeitsstufe, die Zeit anpassen, die dem Nutzer zum Beantworten der Frage zur Verfügung steht. Dies hat Auswirkungen auf die gesamte Sprachverarbeitungskette (End of Speech detection, Beginning of Sepech detection, Request timeouts etc.), denn der Assistent muss in einen "Wartezustand" versetzt werden. Um das zu erreichen müssen entsprechende Timeouts zur Laufzeit eines Requests angepasst werden können, um der jeweiligen Funktion gerecht zu werden.

Dies ergibt den Vorteil, dass hierdurch die Bearbeitung der Anfrage durch das Funktionsmodul P_{F,Max} zusätzlich verbessert wird.

Gemäß einem Ausführungsbeispiel wird für jeden Verarbeitungsschritt der Anfrage erneut ein Funktionsmodul P_{F,Max} aus der Bibliothek mit der höchsten Wahrscheinlichkeit P_{Max} zum Bearbeiten der Anfrage in diesem Schritt ausgewählt, also für den ersten Schritt das Funktionsmodul P_{F1,Max} mit der Wahrscheinlichkeit P_{1,Max}, für den zweiten Schritt das Funktionsmodul P_{F2,Max} mit der Wahrscheinlichkeit P_{2,Max} und für den n-ten Schritt das Funktionsmodul P_{Fn,Max} mit der Wahrscheinlichkeit P_{n,Max}.

Dies bietet den Vorteil, dass keine statische unflexible Kette schon zu Beginn geladen wird, sondern, dass die geeignetsten Funktionen P_{Fn,Max} quasi zur Laufzeit dynamisch und flexibel für jeden Schritt ausgewählt und dann zur Bearbeitung verwendet werden. Hierdurch wird es ermöglicht, die Anfrage möglichst zielgerichtet zu bearbeiten.

Erfindungsgemäß wird für jeden Verarbeitungsschritt der Anfrage zusätzlich zu dem Funktionsmodul P_{F,Max} mit der höchsten Wahrscheinlichkeit P_{Max} ein anderes Funktionsmodul P_{F,lower} mit einer anderen Wahrscheinlichkeit P_{lower}, insbesondere mit der zweithöchsten Wahrscheinlichkeit P_{F,2nd} bestimmt, insbesondere aus der Bibliothek ausgewählt. Bevorzugt wird diese Vorgehensweise für jeden Verarbeitungsschritt ausgeführt. Bei dem Beispiel: "Spiele Favorit Playlist auf meinem iPhone". Könnte also neben dem Funktionsmodul P_{F,Max} für die deutsche Sprache, das Funktionsmodul P_{F,lower} für die englische Sprache ausgewählt werden.

Dies bietet den Vorteil, dass noch ein weiteres Funktionsmodul ausgewählt wurde, mithin somit schnell zur Verfügung steht, falls sich herausstellt, dass die Wahl von P_{F,Max} als das "passendste" Funktionsmodul für den Verarbeitungsschritt falsch war. In einigen Fällen kann aufgrund von Mehrdeutigkeiten nicht mit absoluter Sicherheit unmittelbar auf das passendste Funktionsmodul geschlossen werden. Die für jeden Schritt n ermittelten Wahrscheinlichkeiten P_{n, max} und P_{n, lower} werden dergestalt in einer Speichereinheit hinterlegt, dass der Algorithmus jederzeit auf die entsprechenden Werte für eine Auswertung zurückgreifen kann.

Gemäß einem Ausführungsbeispiel wertet der virtuelle Assistent die Anfrage parallel mit den Funktionsmodulen P_{F,Max} und P_{F,lower} aus und speichert die sich jeweils ergebenden Ergebnisse ab. Die Ergebnisse werden entsprechend markiert, sodass sie dem Funktionsmodul zuordenbar sind mit dem sie generiert wurden.

Dies bietet den Vorteil, dass hierbei quasi zwei parallel dynamisch erzeugte Verarbeitungsketten realisiert werden. Stellt sich in einem bestimmten Schritt heraus, dass Verarbeitung der Anfrage mit dem Funktionsmodul P_{F,Max} die falsche Wahl war, so kann ohne größeren Zeitverlust unmittelbar auf das durch P_{F,lower} generierte Ergebnis der Anfrage zurückgegriffen werden. Für den Nutzer bedeutet dies eine beträchtliche

Verbesserung der Laufzeitperformance, bei gleichzeitiger Verbesserung der korrekten Erkennung der Absicht

Bevorzugt legt der virtuelle Assistent das Ergebnis des Funktionsmoduls P_{F,lower} anstatt des Ergebnisses des Funktionsmoduls P_{F,Max} für die weitere Auswertung der Anfrage zugrunde, wenn sich ergibt, dass das Funktionsmodul P_{F,Max} nicht das geeignetste Modul zum Auswerten der Anfrage war.

Dies bietet den Vorteil einer Korrekturmöglichkeit, die es ermöglicht die Antwort vor der Ausgabe an den Nutzer einmal oder auch mehrmals zu korrigieren.

Erfindungsgemäß wird die Anfrage, insbesondere parallel, zu der Bearbeitung mit dem Funktionsmodul P_{F,lower} mit dem ein anderes Funktionsmodul P_{F,lower} bearbeitet wird, wenn P_{lower} einen vorgegebenen Wahrscheinlichkeitswert übersteigt. Dieser vorgegebene Wahrscheinlichkeitswert kann so gewählt werden, dass er nicht mehr als 10%, besonders bevorzugt nicht mehr als 25%, kleiner ist als P_{Max}. Oder der vorgegebene Wahrscheinlichkeitswert wird so gewählt, dass er mindestens 50% ist.

Dies bietet den Vorteil, dass eine parallele Verarbeitung nur dann vorgenommen wird, wenn zumindest mit einer gewissen Wahrscheinlichkeit damit gerechnet werden kann, dass das andere Funktionsmodul P_{F,lower} ein relevantes Ergebnis für die Anfrage generiert. Dies schont die Ressourcen der Recheneinheit bei der Bearbeitung der Anfrage.

Zweckmäßig wird in jedem Verarbeitungsschritt jeweils nur das für diesen Verarbeitungsschritt vorgesehene Funktionsmodul P_{n,Max} geladen oder es werden in jedem Verarbeitungsschritt jeweils nur die für diesen Verarbeitungsschritt vorgesehene Funktionsmodule P_{n,Max} und P_{n,lower} geladen.

Dies bietet den Vorteil, dass effizient Ressourcen geschont werden, indem nicht unnötig viel Speicherplatz freigehalten werden muss, wie dies beim Laden der gesamten Kette der Fall wäre. Weiterhin bietet diese den Vorteil, dass Anfrage zu externen Anbietern verringert werden und somit Latenz als auch Kosten gespart werden.

Bei der Auswahl des Funktionsmoduls P_{F,Max} durch den Auswahlalgorithmus kann zusätzlich zum Inhalt der Anfrage auch Hintergrundinformationen verwendet werden. Befindet sich ein Nutzer bei der Verwendung des virtuellen Assistenten beispielsweise in einem Bahnhof, so kann dies die Auswahl der passendsten Domain beeinflussen.

Dies bietet also den Vorteil, dass hierdurch dem Auswahlalgorithmus weitere Informationen bereitgestellt werden, die ihm helfen das passendste Funktionsmodul P_{F,Max} auszuwählen.

Die Auswahl des Funktionsmoduls P_{F,Max} durch den Auswahlalgorithmus kann zusätzlich zum Inhalt der Anfrage auch eine Befehlshistorie des Nutzers berücksichtigen. Da sich Nutzer typischerweise hinsichtlich ihrer Anfragen häufig wiederholen "Wie ist das Wetter in Darmstadt?", können Informationen aus der Befehlshistorie sehr hilfreich beim Auswählen des geeignetsten Funktionsmoduls P_{F,Max} sein.

Dies bietet also den Vorteil, dass hierdurch dem Auswahlalgorithmus weitere Informationen bereitgestellt werden, die ihm helfen das passendste Funktionsmoduls P_{F,Max} auszuwählen.

Vorteilhaft wird die für den Nutzer vordefinierte Kette von Funktionsmodulen zum Auswerten der Anfrage geladen, wenn der Auswahlalgorithmus kein Funktionsmodul P_{F,Max} ermitteln konnte.

Dies bietet den Vorteil, dass der virtuelle Assistent quasi ein Notfallprogramm umfasst, das in Kraft tritt, wenn ansonsten keine Verarbeitung der Anfrage stattfinden würde. Dieses Notfallprogramm entspricht im Wesentlichen der Funktionsweise gängiger virtueller Assistenten.

Der virtuelle Assistent kann ein virtueller Sprachassistent oder ein textbasierter virtueller Assistent sein.

Dies bietet den Vorteil, dass der virtuelle Sprachassistent flexibel über eine Kommunikation mittels eines Browsers aber auch mittels eines Nutzerendgerätes, wie einem Smartphone, einem intelligenten Lautsprecher, einer Smartwatch, einem Tablet oder ähnlichen Geräten ansprechbar ist, insbesondere kann die Eingabe der Anfrage als Sprache über ein Mikrofon des Nutzerendgeräts erfolgen.

Als Beispiel ist ein virtueller Assistent angegeben,
wobei der virtuelle Assistent eingerichtet ist zur dynamischen Generierung einer Kette von Funktionsmodulen des virtuellen Assistenten,
wobei der virtuelle Assistent auf einer Recheneinheit eines Servers und/oder eines Nutzerendgeräts implementiert ist,
wobei der virtuelle Assistent eine Anfrage eines Nutzers erhält,
wobei der virtuelle Assistent einen Auswahlalgorithmus aufweist, der eingerichtet ist das geeignetste Funktionsmoduls P_{F,Max} gemäß dem vorstehend beschriebenen Verfahren auszuwählen,
wobei der virtuelle Assistent ein Verarbeitungsmodul aufweist, das die Anfrage mittels des Funktionsmoduls P_{F,Max} verarbeitet und das Ergebnis der Verarbeitung als Antwort vorhält,
wobei der virtuelle Assistent Mittel zur Ausgabe der Antwort an den Nutzer aufweist. Bei den Mitteln zur Ausgabe der Antwort kann es sich insbesondere um ein Mikrophon und/oder einen Bildschirm des Nutzerendgerätes handeln.

Dadurch, dass die Verarbeitungskette nicht mehr wie herkömmlich an den Nutzer, sondern an die Anfrage "gebunden" ist, ergeben sich für den virtuellen Assistenten viele Vorteile. Der virtuelle Assistent wird in die Lage versetzt flexibel und dynamisch die passenden Funktionsmodule basierend auf die Anfrage zu wählen und anzuwenden. Es wird also eine dynamische Anpassung während der Laufzeit an die Anfrage ermöglicht, ohne dass der Nutzer sein Profil manuell wechseln muss. Insbesondere wird eine Kommunikation in mehreren Sprachen ermöglicht. Die Ausgabestimme des virtuellen Assistenten kann auch den Skill dahingehend ändern, dass Stimmenparameter wie Stimmung, Lautstärke und andere dynamisch der Situation angepasst werden. Dies alles ermöglicht ein einzigartiges Nutzererlebnis.

Gemäß einem dritten Aspekt der Erfindung ist ein Nutzerendgerät angegeben, wobei auf dem Nutzerendgerät der erfindungsgemäße virtuelle Assistent implementiert ist. Bei dem Nutzerendgerät kann es sich um ein Smartphone, ein Tablet, einen Computer, eine Smart-Watch, einen intelligenten Lautsprecher handeln.

Ein solches Nutzerendgerät bietet den Vorteil, dass der Nutzer den virtuellen Assistenten effizient nutzen kann, die diese Geräte entweder in der Lage sind das erfindungsgemäße Verfahren selbst auszuführen oder aber die Anfrage über einen Datenkanal an einen Server weiterzuleiten auf dem der virtuelle Assistent, respektive das Verfahren, verwirklicht ist.

Gemäß einem vierten Aspekt der Erfindung ist ein Computerprogramm zur dynamischen Generierung einer Kette von Funktionsmodulen eines virtuellen Assistenten angegeben, wobei das Computerprogramm eingerichtet ist zur Ausführung der Schritte des vorstehend beschriebenen erfindungsgemäßen Verfahrens.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:
- Fig. 1:: zeigt eine statische Befehlskette eines virtuellen Assistenten gemäß dem bekannten Stand der Technik.
- Fig. 2:: zeigt ein konkretes Beispiel von Fig. 1.
- Fig. 3:: zeigt eine erfindungsgemäße generische flexible, dynamisch erzeugte Befehlskette eines virtuellen Assistenten.
- Fig. 4:: zeigt ein konkretes Beispiel von Fig. 3.
- Fig. 5:: zeigt eine Recheneinheit auf der das erfindungsgemäße Verfahren implementiert ist.
Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

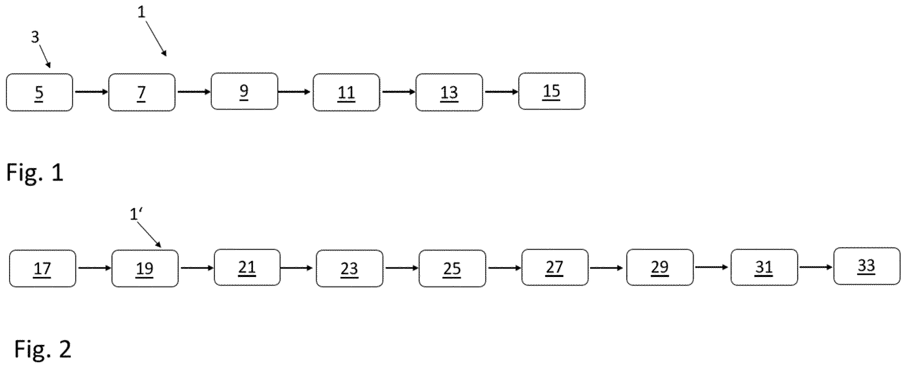

Fig. 1 zeigt wie nach dem aktuellen Stand der für den virtuellen Assistenten eine feste Konfiguration einer Befehlskette 1 geladen von Funktionsmodulen entsprechend dem erkannten Nutzer geladen wird. Diese Befehlskette 1 wird während der gesamten Verarbeitung der Anfrage beibehalten, die Antwort auf die Anfrage an den Nutzer ausgegeben wurde.

Um etwas an der Befehlskette 1 zu ändern, muss der Nutzer oder ein Administrator Einstellungen in der Voice Chain Configuration manuell ändern. Zum Beispiel kann der Nutzer eine andere Sprache über die App auswählen oder einen anderen Skill für einen bestimmten Zweck aktivieren. Nachdem diese Änderung allerdings vorgenommen wurde, wird sie auf jede weitere Anfrage angewandt, bis sie erneut manuell geändert wird.

Eine generische Befehlskette 1 wie in Fig. 1 kann folgende Schritte aufweisen:
Schritt 5: Detektion des "Aufwachwortes" und der Anfrage an den virtuellen Assistenten -> Schritt 7: Identifiziere Nutzer, Nutzerendgerät, Anbieter -> Schritt 9: Lade die Sprachketten-Konfiguration -> Schritt 11: Führe die Sprachketten-Konfiguration aus ->
**Schritt 13:** Generiere die Antwort auf die Anfrage -> Schritt 15: Ausgabe der Antwort als Sprachsignal an den Nutzer.

Fig. 2 zeigt ein konkretes Beispiel von Fig. 1 und illustriert die statische Befehlskette 1'. Zu keinem Zeitpunkt während der Ausführung der Anfrage kann eine Änderung entsprechend dem Kontext, der Äußerung oder einem externen Parameter der Anfrage vorgenommen werden. Somit werden die gleichen Modelle, Spracheinstellungen und Skills sowie Skill-Parameter für jede Anfrage, die der Benutzer äußert, angewendet.

### Das Beispiel aus Fig. 2 kann folgende Schritte aufweisen:

Schritt 17: "Hallo Magenta, spiele Musik" als Aufwachwort und Anfrage-> Schritt 19: Anbieter "Telekom"-> Schritt 21: Lade die Sprachketten-Konfiguration -> Schritt 23: Transkribiere deutsches Sprachsignal in Text -> Schritt 25: Detektiere Domain, Intent, Entity mittels deutschen Funktionsmodulen -> Schritt 27: Ausführen des Skills mit den statisch vorgegebenen Funktionsmodulen -> Schritt 29: Generiere eine Audioausgabe basierend auf der Antwort des Skills in deutscher Sprache -> Schritt 31: Sende die Antwort -> Schritt 33: Ausgabe der Antwort an den Nutzer.

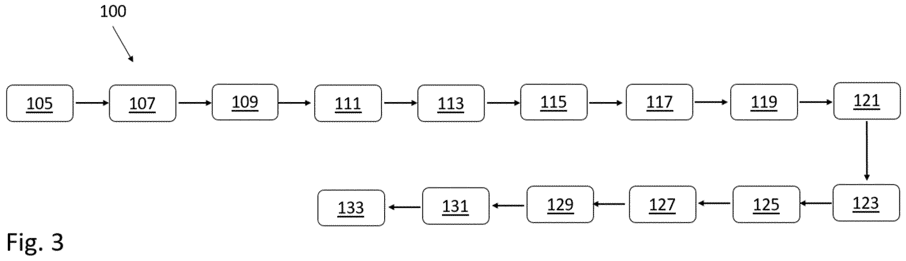

Fig. 3 zeigt eine erfindungsgemäße generische flexible, dynamisch erzeugte Befehlskette 100 eines virtuellen Assistenten, insbesondere eines virtuellen Sprachassistenten.

An mehreren Schritten der Befehlskette 100, insbesondere an jedem Schritt der Befehlskette 100, kann die Anfrage und optional zusätzlich weitere verfügbare Informationen dahingehend analysiert werden, um das passende Funktionsmodul für diesen Schritt zu ermitteln und dann für die Verarbeitung auszuwählen.

### Die generische Befehlskette 100 gemäß Fig. 3 kann die folgenden Schritte aufweisen:

Schritt 105: Detektion des Aufwachworts und der Anfrage -> Schritt 107: Analyse des Aufwachworts -> Schritt 109: Generiere die initiale Konfiguration des virtuellen Assistenten basierend auf dem Aufwachwort -> Schritt 111: Starte die Transkription der Anfrage, respektive des Kommandos -> Schritt 113: flexible Aktjustierung der Konfiguration des ASR Moduls -> Schritt 115: Laden von speziellen Modellen, Modulen und/oder Parametern, falls nötig -> Schritt 117: Transkription der Anfrage, respektive des Kommandos -> Schritt 119: Bestimmen und Festlegen der NLU Konfiguration (Modellauswahl, Sprachauswahl), falls notwendig -> Schritt 121: Sendetext an das NLU Modell -> Schritt 123: dynamisches bestimmen des Skills, respektive des Funktionsmoduls, für den Intent der gegenwärtigen Anfrage -> Schritt 125: Sendeanfrage zu dem ausgewählten Skill Funktionsmodul, gegebenenfalls mit zusätzlichen Parametern -> Schritt 127: flexibles Bestimmen der TTS Konfiguration gemäß des Skills und der Skill Antwort -> Schritt 129: generiere Audiosignale für den Output -> Schritt 131: sendet die Antwort an das Nutzerendgerät -> Schritt 133: Ausgabe der Antwort des virtuellen Assistenten an den Nutzer als Sprachnachricht.

Die Echtzeit-Sprachkette analysiert die Eingabe und leitet daraus Anforderungen an jeden Schritt der Befehlskette 100 ab. Entsprechend den Anforderungen wird der nächste Schritt entsprechend konfiguriert oder sogar der aktuelle Schritt für eine bessere Übereinstimmung wiederholt.

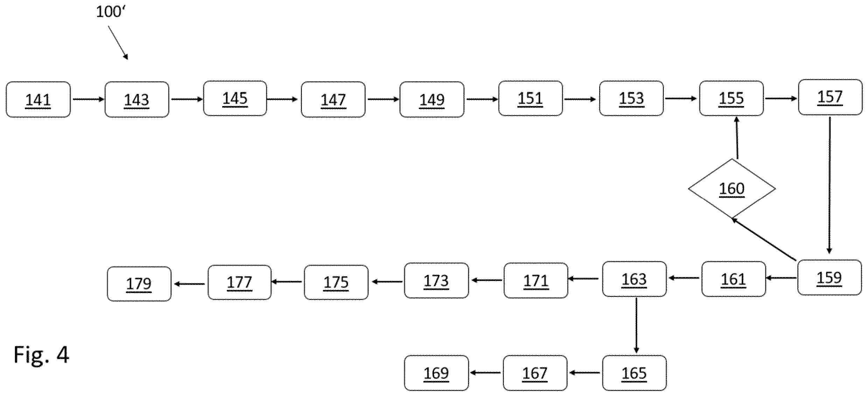

Im Beispiel von Fig. 4 meldet sich der Nutzer in Schritt 141 mit einem französischen Aufwachwort an. In Schritt 143 erkennt der virtuelle Assistent, respektive der Auswahlalgorithmus, das französische Aufwachwort. In Schritt 145 wählt der Auswahlalgorithmus das entsprechende Funktionsmodul aus und konkret im Beispiel von Fig. 4 lädt die ASR-Konfiguration mit dem generischen französischen Modell, um den Befehl der Anfrage in Schritt 147 zu transkribieren, der auf das Aufwachwort folgt.

Falls sich der Nutzer nun entscheidet während der Kommunikation mit dem virtuellen Assistenten von französisch auf Deutsch zu wechseln und eine entsprechende Anfrage an den virtuellen Assistenten stellt, wird diese Anfrage in Schritt 149 detektiert und als deutsches Kommando mit deutschen technischen Begriffen analysiert. Beispielsweise kann der Nutzer nach Informationen zur Einrichtung eines Internetgeräts fragen. Diese Anfrage enthält einige Fachbegriffe, die mit einer entsprechenden Domäne zusammenhängen, sodass der Auswahlalgorithmus in Schritt 151 das entsprechende Funktionsmodul lädt, dass die Funktionalität des ASR Moduls für deutsche technische Begriffe bereitstellt. Die Befehlskette 100' ist also nicht statisch, sondern hat flexibel auf die Anfrage durch den Nutzer reagiert. In Schritt 153 wird diese Anfrage dann in deutscher Sprache transkribiert. In Schritt 155 wird das deutsche Dispatcher-Model für technische Begriffe geladen.

Die Informationen über die erkannte Domäne und das verwendete Modell werden in Schritt 157 an das NLU Modell weitergegeben. In Schritt 159 wird als passendes Funktionsmodul der richtige Dispatcher ausgewählt, um die Intent-Erkennung zu optimieren. Wird jedoch kein Intent oder kein Skill gefunden (Schritt 160), wird die Anfrage wiederholt und die Befehlskette 100' kehrt zu Schritt 155 zurück. Für diesen Fall kann bei dem erneuten Durchlauf beispielsweise das Standard-Dispatcher-Modell zum Auffinden des Intent oder des Skills verwendet werden. Wurde erfolgreich ein Skill oder ein Intent identifiziert läuft die Befehlskette 100' in Schritt 161.

In Schritt 161 werden die Anfrage und die ermittelten Parameter, gegebenenfalls zusammen mit der Nutzlast, an den entsprechenden Skill übergeben. Der Skill, welcher ebenfalls über ein entsprechendes Funktionsmodul realisiert ist, bearbeitet die Anfrage des Nutzers. Insbesondere entscheidet der Skill auch, wie er nun weiter vorgeht, um die beste Antwort für den Nutzer bereitzustellen.

In Schritt 163 bestimmt der virtuelle Assistent dynamisch, welcher Outputkanal für die Antwort ausgewählt wird. Hierbei muss es sich insbesondere nicht um denselben Kanal handeln, über den die Anfrage durch den Nutzer übermittelt wurde.

Als erste Alternative kann in Schritt 165 die Ausgabe über den Bildschirm gewählt werden. In diesem Fall wird in Schritt 167 die Anfrage an ein Funktionsmodul des Nutzerendgeräts übermittelt, dass eine Darstellung der Antwort auf dem Bildschirm realisiert. In Schritt 169 wird die Antwort auf dem Bildschirm des Nutzerendgeräts für den Nutzer dargeboten.

Als zweiter Alternative kann festgelegt werden, dass die Ausgabe über ein Mikrofon erfolgen soll.

In Schritt 171 stellt der Algorithmus fest, dass die Anfrage sowohl deutsche als auch englische Begriffe enthält.

In Schritt 173 bestimmt der virtuelle Assistent das beste TTS-Modell, das entsprechend der gegebenen Antwort zu verwenden ist. Da in dem deutschen Satz viele englische Begriffe gemischt sind, wird das beste Modell für diesen Fall dynamisch ausgewählt und die Sprachausgabe entsprechend synthetisiert. Dadurch wird der Bedarf an speziellen SSML-Tags zur Optimierung der Aussprache stark reduziert und dies durch das Laden des besten Modells gehandhabt. Dies ermöglicht auch kleinere und schnellere TTS-Modelle, die für bestimmte Domänen optimiert werden können.

In Schritt 175 wird das Audiosignal für die Antwort generiert.

Sobald die Antwort bereitgestellt wurde, kann sie in Schritt 177 an den richtigen Ausgangskanal geleitet werden. Dies muss nicht zwangsläufig das Gerät sein, von dem die Anfrage ausging. Voreinstellungen und Datenschutzeinstellungen werden verwendet, um die Antwort passend an den Nutzer zu senden.

In Schritt 179 erfolgt die Antwort des virtuellen Assistenten für den Nutzer in Form eines Audiosignals über einen Lautsprecher des Nutzerendgeräts.

Die dynamisch erzeugte Befehlskette 100' gemäß Fig. 4 ermöglicht also vorteilhaft eine bisher nicht erreichte Flexibilität in der Interaktion des virtuellen Assistenten mit dem Nutzer. Anfragen des Nutzers werden möglichst zielgerichtet und mit einer bisher nicht erreichbaren Genauigkeit beantwortet.

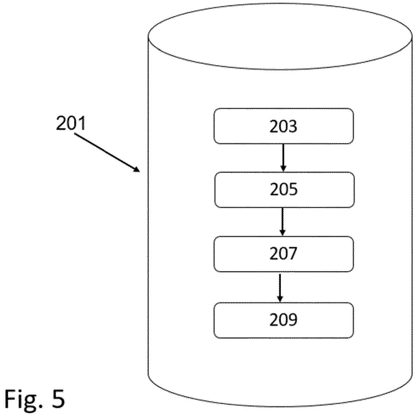

Fig. 5 zeigt eine Recheneinheit 201 auf der das erfindungsgemäße Verfahren ablaufen kann. Diese Rechnereinheit 201 kann beispielsweise auf einem Nutzerendgerät, wie einem Smartphone, einem Tablet einem intelligenten Lautsprecher und/oder eine Computer oder auch auf einem Server eines Dienstleisters im Internet implementiert sein. Ein auf der Rechnereinheit 201 implementiertes Computerprogramm führt als Algorithmus die folgenden Verfahrensschritte aus:
Schritt 203: Übertragen einer Anfrage eines Nutzers an den virtuellen Assistenten;
Schritt 205: Analysieren der Anfrage mittels eines Auswahlalgorithmus im Hinblick darauf, welches Funktionsmodul aus der Bibliothek mit der höchsten Wahrscheinlichkeit P_{Max} dazu geeignet ist, die Anfrage des Nutzers zu bearbeiten;
Schritt 207: Auswahl des Funktionsmoduls P_{F,Max} mit der höchsten Wahrscheinlichkeit aus der Bibliothek von verschiedenen Funktionsmodulen durch den Auswahlalgorithmus;
Schritt 209: Bearbeiten der Anfrage des Nutzers durch den virtuellen Assistenten mittels des ausgewählten Funktionsmoduls P_{F,Max}.

## Patentansprüche

1. Verfahren zur dynamischen Generierung einer Kette von Funktionsmodulen eines virtuellen Assistenten, wobei der virtuelle Assistent als Software auf einer Recheneinheit implementiert ist, wobei dem virtuellen Assistenten eine Bibliothek von verschiedenen Funktionsmodulen zum Beantworten von Anfragen von Nutzern bereitgestellt ist, wobei das Verfahren die folgenden Schritte aufweist:
• Übertragen einer Anfrage eines Nutzers an den virtuellen Assistenten;
• Analysieren der Anfrage mittels eines Auswahlalgorithmus im Hinblick darauf, welches Funktionsmodul aus der Bibliothek mit der höchsten Wahrscheinlichkeit P_{Max} dazu geeignet ist, die Anfrage des Nutzers zu bearbeiten;
• Auswahl des Funktionsmoduls P_{F,Max} mit der höchsten Wahrscheinlichkeit aus der Bibliothek von verschiedenen Funktionsmodulen durch den Auswahlalgorithmus;
• Bearbeiten der Anfrage des Nutzers durch den virtuellen Assistenten mittels des ausgewählten Funktionsmoduls P_{F,Max},
**dadurch gekennzeichnet,**
**dass** für jeden Verarbeitungsschritt der Anfrage zusätzlich zu dem Funktionsmodul P_{F,Max} mit der höchsten Wahrscheinlichkeit P_{Max} ein anderes Funktionsmodul P_{F,lower} mit einer anderen Wahrscheinlichkeit P_{lower} ausgewählt wird, wobei die Anfrage zusätzlich mit dem anderen Funktionsmodul P_{F,lower} bearbeitet wird, wenn P_{lower} einen vorgegebenen Wahrscheinlichkeitswert übersteigt.

2. Verfahren nach Anspruch 1, wobei der Auswahlalgorithmus zusätzlich Parameter bestimmt, insbesondere auswählt, die mit der höchsten Wahrscheinlichkeit P_{Para ,Max} dazu geeignet sind, die Anfrage des Nutzers zu bearbeiten und diese Parameter P_{Para ,Max} an das ausgewählte Funktionsmodul P_{F,Max} übergibt.

3. Verfahren nach einem der vorhergehenden Ansprüche, wobei für jeden Verarbeitungsschritt der Anfrage erneut ein Funktionsmodul P_{F,Max} aus der Bibliothek mit der höchsten Wahrscheinlichkeit P_{Max} zum Bearbeiten der Anfrage in diesem Schritt ausgewählt wird, also für den ersten Schritt das Funktionsmodul P_{F1,Max} mit der Wahrscheinlichkeit P_{1,Max}, für den zweiten Schritt das Funktionsmodul P_{F2,Max} mit der Wahrscheinlichkeit P_{2,Max} und für den n-ten Schritt das Funktionsmodul P_{Fn,Max} mit der Wahrscheinlichkeit P_{n,Max}.

4. Verfahren nach Anspruch 1, wobei der virtuelle Assistent die Anfrage parallel mit den Funktionsmodulen P_{F,Max} und P_{F,lower} auswertet und die sich jeweils ergebenden Ergebnisse und abspeichert.

5. Verfahren nach Anspruch 4, wobei der virtuelle Assistent das Ergebnis des Funktionsmoduls P_{F,lower} anstatt des Ergebnisses des Funktionsmoduls P_{F,Max} für die weitere Auswertung der Anfrage zugrunde legt, wenn sich ergibt, dass das Funktionsmodul P_{F,Max} nicht das geeignetste Modul zum Auswerten der Anfrage war.

6. Verfahren nach einem der vorhergehenden Ansprüche, wobei in jedem Verarbeitungsschritt jeweils nur das für diesen Verarbeitungsschritt vorgesehene Funktionsmodul P_{n,Max} geladen wird oder das in jedem Verarbeitungsschritt jeweils nur die für diesen Verarbeitungsschritt vorgesehene Funktionsmodule P_{n,Max} und P_{n,lower} geladen werden.

7. Verfahren nach einem der vorhergehenden Ansprüche, wobei bei der Auswahl des Funktionsmoduls P_{F,Max} durch den Auswahlalgorithmus zusätzlich zum Inhalt der Anfrage auch Hintergrundinformationen verwendet werden.

8. Verfahren nach einem der vorhergehenden Ansprüche, wobei bei der Auswahl des Funktionsmoduls P_{F,Max} durch den Auswahlalgorithmus zusätzlich zum Inhalt der Anfrage auch eine Befehlshistorie des Nutzers berücksichtigt wird.

9. Verfahren nach einem der vorhergehenden Ansprüche, wobei die für den Nutzer vordefinierte Kette von Funktionsmodulen zum Auswerten der Anfrage geladen wird, wenn der Auswahlalgorithmus kein Funktionsmodul P_{F,Max} ermitteln konnte.

10. Verfahren nach einem der vorhergehenden Ansprüche, wobei der virtuelle Assistent ein virtueller Sprachassistent oder ein textbasierter virtueller Assistent ist.

11. Nutzerendgerät aufweisend einen Virtueller Assistent eingerichtet zur Durchführung der Schritte nach Anspruch 1.

12. Computerprogramm zur dynamischen Generierung einer Kette von Funktionsmodulen eines virtuellen Assistenten, wobei das Computerprogramm eingerichtet ist zur Ausführung der Schritte eines der Verfahren 1 bis 10.

## Claims

1. A method for the dynamic generation of a chain of function modules of a virtual assistant, wherein the virtual assistant is implemented as software on a computing unit, wherein the virtual assistant is provided with a library of various function modules for answering requests from users, wherein the method comprises the following steps:
• transmitting a request from a user to the virtual assistant;
• analysing the request by means of a selection algorithm with regard to which function module from the library with the highest probability P_{Max} is suitable for processing the user's request;
• selection of the function module P_{F,Max} with the highest probability from the library of different function modules by the selection algorithm;
• processing of the user's request by the virtual assistant using the selected function module P_{F,Max},
**characterised in that,**
in addition to the function module P_{F,Max} with the highest probability P_{Max}, another function module P_{F, lower} with another probability P_{lower} is selected for each processing step of the request, wherein the request is also processed with the other function module P_{F,lower}, if P_{lower} exceeds a given probability value.

2. The method according to claim 1, wherein the selection algorithm also determines, in particular selects, parameters which, with the highest probability P_{Para,Max}, are suitable for processing the user's request, and transfers these parameters P_{Para,Max} to the selected function module P_{F,Max}.

3. The method according to any one of the preceding claims, wherein, for each processing step of the enquiry, a function module P_{F,Max} with the highest probability P_{Max} is again selected from the library for processing the request in this step, i.e. for the first step the function module P_{F1,Max} with the probability P_{1,Max}, for the second step the function module P_{F2,Max} with the probability P_{2,Max} and for the n-th step the function module P_{Fn,Max} with the probability P_{n,Max}.

4. The method according to claim 1, wherein the virtual assistant evaluates the request in parallel with the function modules P_{F,Max} and P_{F, lower} and stores the results obtained in each case.

5. The method according to claim 4, wherein the virtual assistant takes the result of the function module P_{F,lower} instead of the result of the function module P_{F,Max} as a basis for the further evaluation of the request, if it emerges that the function module P_{F,Max} was not the most suitable module for evaluating the enquiry.

6. The method according to any one of the preceding claims, wherein in each processing step only the function module P_{n,Max} provided for this processing step is loaded in each case or in each processing step only the function modules P_{n,Max} and P_{n,lower} provided for this processing step are loaded in each case.

7. The method according to any one of the preceding claims, wherein, in addition to the content of the request, background information is also used in the selection of the function module P_{F,Max} by the selection algorithm.

8. The method according to any one of the preceding claims, wherein, in addition to the content of the request, the user's command history is also taken into account in the selection of the function module P_{F,Max} by the selection algorithm.

9. The method according to any one of the preceding claims, wherein the chain of function modules predefined for the user is loaded for the evaluation of the request, if the selection algorithm could not ascertain a function module P_{F,Max}.

10. The method according to any one of the preceding claims, wherein the virtual assistant is a virtual language assistant or a text-based virtual assistant.

11. A user terminal comprising a virtual assistant configured to perform the steps according to claim 1.

12. A computer program for the dynamic generation of a chain of function modules of a virtual assistant, wherein the computer program is configured to perform the steps of one of the methods 1 to 10.

## Revendications

1. Procédé de génération dynamique d'une chaîne de modules fonctionnels d'un assistant virtuel, dans lequel l'assistant virtuel est implémenté comme un logiciel sur l'unité informatique, dans lequel l'assistant virtuel dispose d'une bibliothèque de modules fonctionnels différents pour répondre aux requêtes des utilisateurs, dans lequel le procédé comprend les étapes suivantes :
• transmission d'une requête d'un utilisateur à l'assistant virtuel ;
• analyse de la demande à l'aide d'un algorithme de sélection pour déterminer quel module fonctionnel de la bibliothèque a la plus haute probabilité que P_{Max} soit adapté au traitement de la demande de l'utilisateur ;
• sélection du module fonctionnel P_{F,Max} avec la probabilité la plus élevée dans la bibliothèque des différents modules fonctionnels par l'algorithme de sélection,
• traitement de la demande de l'utilisateur par l'assistant virtuel à l'aide du module fonctionnel sélectionné P_{F,Max},
**caractérisé en ce que**
pour chaque étape de traitement de la demande en plus du module fonctionnel P_{F,Max} avec la probabilité la plus élevée P_{Max} un autre module fonctionnel P_{F, inférieur} est sélectionné avec une probabilité différente P_{inférieur}, dans lequel la requête avec l'autre module fonctionnel P_{F, inférieur} est traitée en outre si P_{inférieur} dépasse une valeur de probabilité prédéterminée.

2. Procédé selon la revendication 1, dans lequel l'algorithme détermine en outre des paramètres, notamment sélectionne celui avec la plus forte probabilité P_{para,Max} adapté au traitement de la demande de l'utilisateur et transmet ces paramètres P_{para,Max} au module fonctionnel sélectionné P_{F,Max}.

3. Procédé selon une quelconque des revendications précédentes, dans lequel pour chaque étape de traitement de la requête un module fonctionnel P_{F,Max} de la bibliothèque avec la plus forte probabilité P_{Max} utilisé pour traiter la requête est sélectionné dans cette étape, à savoir pour la première étape le module fonctionnel P_{F1,Max} avec la probabilité P_{1,Max}, pour la deuxième étape le module fonctionnel P_{F2,Max} avec la probabilité P_{2,Max} et pour la n-ième étape le module fonctionnel P_{Fn,Max} avec la probabilité P_{n,Max}.

4. Procédé selon la revendication 1, dans lequel l'assistant virtuel évalue la requête en parallèle avec les modules fonctionnels P_{F,Max} et P_{F, inférieur} et enregistre les résultats obtenus.

5. Procédé selon la revendication 4, dans lequel l'assistant virtuel utilise comme base pour une évaluation plus approfondie de la demande le résultat du module fonctionnel P_{F,inférieur} au lieu du résultat du module fonctionnel P_{F,Max} s'il s'avère que le module fonctionnel P_{F,Max} n'était pas le module le plus approprié pour évaluer la demande.

6. Procédé selon une quelconque des revendications précédentes, dans lequel dans chaque étape de traitement uniquement le module fonctionnel P_{n,Max} destiné à cette étape de traitement est chargé ou seuls les modules fonctionnels P_{n,Max} et P_{n,inférieur} destinés à cette étape de traitement sont chargés à chaque étape de traitement.

7. Procédé selon une des revendications précédentes, dans lequel lors de la sélection du module fonctionnel P_{F,Max} par l'algorithme de sélection, des informations de fond sont également utilisées en plus du contenu de la requête.

8. Procédé selon une quelconque des revendications précédentes, dans lequel lors de la sélection du module fonctionnel P_{F,Max} par l' algorithme de sélection, un historique des commandes de l'utilisateur est également pris en compte en plus du contenu de la requête.

9. Procédé selon une des revendications précédentes, dans lequel la chaîne de modules fonctionnels prédéfinie pour l'utilisateur est chargée pour évaluer la requête si l'algorithme de sélection n'a pas pu déterminer un module fonctionnel P_{F,Max}.

10. Procédé selon une quelconque des revendications précédentes, dans lequel l'assistant virtuel est un assistant virtuel vocal ou un assistant virtuel textuel.

11. Terminal d'utilisateur doté d'un assistant virtuel configuré pour mettre en œuvre les étapes selon la revendication 1.

12. Programme informatique pour la génération dynamique d'une chaîne de modules fonctionnels d'un assistant virtuel, dans lequel le programme informatique est configuré pour mettre en œuvre les étapes d'un des procédés 1 à 10.
